(19) **Europäisches Patentamt**
**European Patent Office**
**Office européen des brevets**

(11) **EP 3 779 774 B1**

(12) **EUROPEAN PATENT SPECIFICATION**

(45) Date of publication and mention
of the grant of the patent:
**08.05.2024 Bulletin 2024/19**

(21) Application number: **19784497.0**

(22) Date of filing: **25.03.2019**

(51) International Patent Classification (IPC):
**G06V 10/25** *(2022.01)* **G06V 10/44** *(2022.01)*
**G06V 10/764** *(2022.01)* **G06V 10/77** *(2022.01)*
**G06V 10/82** *(2022.01)* **G06V 20/70** *(2022.01)*
**G06N 3/084** *(2023.01)* **G06N 3/045** *(2023.01)*

(52) Cooperative Patent Classification (CPC):
**G06N 3/084; G06F 18/213; G06N 3/045;**
**G06V 10/25; G06V 10/454; G06V 10/764;**
**G06V 10/7715; G06V 10/774; G06V 10/7784;**
**G06V 10/82; G06V 20/70**

(86) International application number:
**PCT/CN2019/079404**

(87) International publication number:
**WO 2019/196633 (17.10.2019 Gazette 2019/42)**

(54) **TRAINING METHOD FOR IMAGE SEMANTIC SEGMENTATION MODEL AND SERVER**

TRAININGSVERFAHREN FÜR EIN SEMANTISCHES BILDSEGMENTIERUNGSMODELL UND
SERVER

PROCÉDÉ D'APPRENTISSAGE POUR MODÈLE DE SEGMENTATION SÉMANTIQUE D'IMAGES
ET SERVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2018 CN 201810317672**

(43) Date of publication of application:
**17.02.2021 Bulletin 2021/07**

(73) Proprietor: **Tencent Technology (Shenzhen)
Company Limited
Shenzhen, Guangdong, 518057 (CN)**

(72) Inventor: **JIE, Zequn
Shenzhen, Guangdong 518057 (CN)**

(74) Representative: **Eisenführ Speiser
Patentanwälte Rechtsanwälte PartGmbB
Postfach 31 02 60
80102 München (DE)**

(56) References cited:
**CN-A- 107 145 845   CN-A- 107 316 015**

- **JIWOON AHN ET AL: "Learning Pixel-level
  Semantic Affinity with Image-level Supervision
  for Weakly Supervised Semantic Segmentation",
  ARXIV.ORG, CORNELL UNIVERSITY LIBRARY,
  201 OLIN LIBRARY CORNELL UNIVERSITY
  ITHACA, NY 14853, 28 March 2018 (2018-03-28),
  XP081225854,**
- **LIANG-CHIEH CHEN ET AL: "DeepLab: Semantic
  Image Segmentation with Deep Convolutional
  Nets, Atrous Convolution, and Fully Connected
  CRFs", ARXIV.ORG, CORNELL UNIVERSITY
  LIBRARY, 201 OLIN LIBRARY CORNELL
  UNIVERSITY ITHACA, NY 14853, 2 June 2016
  (2016-06-02), XP080705599,**
- **Liang-Chieh Chen ET AL: "Rethinking Atrous
  Convolution for Semantic Image
  Segmentation", , 17 June 2017 (2017-06-17),
  XP055558070, Retrieved from the Internet:
  URL:https://arxiv.org/pdf/1706.05587v1.pdf**
- **Zhou Bolei ET AL: "Learning Deep Features for
  Discriminative Localization", , 14 December 2015
  (2015-12-14), pages 1-10, XP055775238,
  Retrieved from the Internet:
  URL:https://arxiv.org/pdf/1512.04150.pdf
  [retrieved on 2021-02-11]**

- **WEI YUNCHAO ET AL: "Revisiting Dilated Convolution: A Simple Approach for Weakly- and Semi-Supervised Semantic Segmentation", 2018 IEEE/CVF CONFERENCE ON COMPUTER VISION AND PATTERN RECOGNITION, IEEE, 18 June 2018 (2018-06-18), pages 7268-7277, XP033473646, DOI: 10.1109/CVPR.2018.00759 [retrieved on 2018-12-14]**

## Description

This application claims priority to Chinese Patent Application No. 201810317672.3, filed with the Chinese Patent Office on April 10, 2018 and entitled "TRAINING METHOD FOR IMAGE SEMANTIC SEGMENTATION MODEL AND SERVER".

## TECHNICAL FIELD

The present disclosure relates to the field of computer technologies, and in particular, to training for an image semantic segmentation model.

## BACKGROUND

An image semantic segmentation is the basis of image understanding, and the image semantic segmentation is very important in automatic drive, unmanned aerial vehicle applications, and wearable device applications. An image is formed by many pixels, and the semantic segmentation is grouping the pixels according to different semantic meanings expressed by the pixels in the image.

In the conventional technology, usually, a trained conventional deep convolutional neural network is used as an image semantic segmentation network. First, full-image classification is performed on an input image, object regions corresponding to a full-image classification annotation in the image are located according to the network, and then the regions are used as supervision information for image semantic segmentation, and the image semantic segmentation network is trained by using the supervision information.

In the conventional technology, by locating the object regions corresponding to the full-image classification annotation by using a conventional convolution operation, usually, only one or more most discriminative parts of an entire object can be located, and it is difficult to locate all object regions. Therefore, the image semantic segmentation in the related art has a problem that not all object regions can be located.

JIWOON AHN ET AL.: "Learning Pixel-level Semantic Affinity with Image-level Supervision for Weakly Supervised Semantic Segmentation" discloses a Deep Neural Network called Affinity Net that predicts semantic affinity between a pair of adjacent image coordinates, the network includes a backbone network, and the following three layers added on the top of the backbone network: A 3x3 convolution layer for adaptation, a global average pooling layer for abstracting the last feature map into a single vector, and a fully connected layer for learning the entire network with a single classification criterion. The backbone network is configured to obtain a feature map.

LIANG-CHIEH CHEN ET AL.: "DeepLab: Semantic Image Segmentation with Deep Convolutional Nets, Atrous Convolution, and Fully Connected CRFs" proposes atrous spatial pyramid pooling to robustly segment objects at multiple scales. ASPP probes an incoming convolutional feature layer with filters at multiple sampling rates and effective fields-of-views, thus capturing objects as well as image context at multiple scales.

LIANG-CHIEH CHEN ET AL.: "Rethinking Atrous Convolution for Semantic Image Segmentation" proposes to an improved Atrous Spatial Pyramid Pooling module, which probes convolutional features at multiple scales, with image-level features encoding global context and further boost performance.

## SUMMARY

A training method for an image semantic segmentation model and a server are provided according to embodiments of the present disclosure, to locate all object regions from a raw image, thereby improving the segmentation quality of image semantic segmentation.

To resolve the foregoing technical problem, the following technical solutions are provided according to the embodiments of the present disclosure.

According to one aspect, a training method for an image semantic segmentation model, performed by a server, is provided according to an embodiment of the present disclosure, the method including:

obtaining a raw image for model training;

performing a full-image classification annotation on the raw image at different dilation rates by using a multi-rate dilated convolutional neural network model, to obtain a global object location map corresponding to the raw image, where the multi-rate dilated convolutional neural network model is a convolutional neural network configured to perform dilated convolution at multiple dilation rates, and the multi-rate dilated convolutional neural network model includes N convolutional layers, an $N^{th}$ convolutional layer being a multi-rate dilated convolutional layer configured to simultaneously perform dilated convolution at multiple dilation rates, and N being a positive integer, and where

the performing a full-image classification annotation on the raw image at different dilation rates by using a multi-rate dilated convolutional neural network model, to obtain a global object location map corresponding to the raw image comprises:

extracting a feature map of the target object from the raw image by using first N-1 convolutional layers in the multi-rate dilated convolutional neural network model;

performing dilated convolution processing on the feature map of the target object at multiple dilation rates d separately by using the multi-rate dilated convolutional layer, to obtain object regions at different degrees of dispersion, where d is a positive integer, any one of the degrees of dispersion indicating a distribution of object regions that is on a target object and that is obtained at a dilation rate corresponding to the degree of dispersion by using the multi-rate dilated convolutional neural network model, a lower value of the degree of dispersion corresponds to more concentrated distribution of the object regions on a small part of the target object, and a higher value of the degree of dispersion corresponds to more dispersed distribution of the object regions on the entire target object;

obtaining a first object region in a case that the dilation rate is 0, and a second object region in a case that the dilation rate is greater than 0;

obtaining a first weight corresponding to the first object region, and a second weight corresponding to the second object region, where the first weight is greater than the second weight; and

fusing the first object region and the second object region at different degrees of dispersion according to the first weight and the second weight, to obtain the global object location map; and

using the global object location map as supervision information for an image semantic segmentation network model, and training the image semantic segmentation network model by using the supervision information.

According to one aspect, a server is provided according to an embodiment of the present disclosure, the server including:

an image obtaining module, configured to obtain a raw image for model training;

a global object location module, configured to perform a full-image classification annotation on the raw image at different dilation rates by using a multi-rate dilated convolutional neural network model, to obtain a global object location map corresponding to the raw image, where the multi-rate dilated convolutional neural network model is a convolutional neural network configured to perform dilated convolution at multiple dilation rates, and the multi-rate dilated convolutional neural network model includes N convolutional layers, an $N^{th}$ convolutional layer being a multi-rate dilated convolutional layer configured to simultaneously perform dilated convolution at multiple dilation rates, and N being a positive integer, and where

performing a full-image classification annotation on the raw image at different dilation rates by using a multi-rate dilated convolutional neural network model, to obtain a global object location map corresponding to the raw image includes:

extracting a feature map of the target object from the raw image by using first N-1 convolutional layers in the multi-rate dilated convolutional neural network model;

performing dilated convolution processing on the feature map of the target object at multiple dilation rates d separately by using the multi-rate dilated convolutional layer, to obtain the object regions at different degrees of dispersion, wherein d is a positive integer, any one of the degrees of dispersion indicating a distribution of object regions that is on a target object and that is obtained at a dilation rate corresponding to the degree of dispersion by using the multi-rate dilated convolutional neural network model, a lower value of the degree of dispersion corresponds to more concentrated distribution of the object regions on a small part of the target object, and a higher value of the degree of dispersion corresponds to more dispersed distribution of the object regions on the entire target object;

obtaining a first object region in a case that the dilation rate is 0, and a second object region in a case that the dilation rate is greater than 0;

obtaining a first weight corresponding to the first object region, and a second weight corresponding to the second object region, wherein the first weight is greater than the second weight; and

fusing the first object region and the second object region at different degrees of dispersion according to the first weight and the second weight, to obtain the global object location map; and

a model training module, configured to use the global object location map as supervision information for an image semantic segmentation network model, and train the image semantic segmentation network model by using the supervision information.

In the second aspect, the composition modules of the server may further perform steps described in the first aspect and possible implementations, and for details, one can refer to description in the foregoing first aspect and the possible implementations.

According to one aspect, a server is provided according to an embodiment of the present disclosure, the server including: a processor and a memory, the memory being configured to store an instruction; and the processor being configured to execute the instruction in the memory, so that the server performs the method according to any one of the first aspect.

According one aspect, a computer readable storage medium is provided according to an embodiment of the present disclosure, the computer readable storage medium storing an instruction, and the instruction, when run on a computer, causing the computer to perform the method of the foregoing aspects.

According to one aspect, a computer program product including an instruction is provided according to an embodiment of the present disclosure, the instruction, when run on a computer, causing the computer to perform the method of the foregoing aspects.

It can be seen from the foregoing technical solutions that, the embodiments of the present disclosure have the following advantages.

In the embodiments of the present disclosure, first, a raw image for model training is obtained, then, a full-image classification annotation is performed on the raw image at different dilation magnifications by using a multi-magnification dilated convolutional neural network model, to obtain global object location maps in the raw image at different degrees of dispersion, any one of the degrees of dispersion indicating a distribution, on a target object, of object regions located at a dilation magnification corresponding to the degree of dispersion by using the multi-magnification dilated convolutional neural network model; and finally, the global object location maps are used as supervision information for an image semantic segmentation network model, and the image semantic segmentation network model is trained by using the supervision information. In the embodiments of the present disclosure, because the full-image classification annotation is performed on the raw image by using the multi-magnification dilated convolutional neural network model, global object location maps at different degrees of dispersion can be located from the raw image through a multi-magnification dilated convolution of the multi-magnification dilated convolutional neural network model. The global object location maps include all regions of the target object. Therefore, in the embodiments of the present disclosure, all object regions corresponding to the full-image classification annotation in the raw image are precisely located by the multi-magnification dilated convolutional neural network model, thereby improving the segmentation quality of image semantic segmentation.

**BRIEF DESCRIPTION OF THE DRAWINGS**

To describe the technical solutions in the embodiments of the present disclosure more clearly, the following briefly describes the accompanying drawings required for describing the embodiments. Apparently, the accompanying drawings in the following descriptions show merely some embodiments of the present disclosure, and persons skilled in the art may still derive other drawings from these accompanying drawings.

FIG. 1 is a schematic block flowchart of a training method for an image semantic segmentation model according to an embodiment of the present disclosure;

FIG. 2 is a schematic structural diagram of a multi-magnification dilated convolutional network model according to an embodiment of the present disclosure;

FIG. 3 is a schematic diagram of a process of obtaining an object region in an image at a dilation magnification by using a deep convolutional neural network model according to an embodiment of the present disclosure;

FIG. 4 is a schematic diagram of dilated convolutions of different dilation magnifications and corresponding object regions located in an image according to an embodiment of the present disclosure;

FIG. 5 is a schematic diagram of a network segmentation result of weakly supervised image classification annotation training according to an embodiment of the present disclosure;

FIG. 6-a is a schematic structural diagram showing components of a server according to an embodiment of the present disclosure;

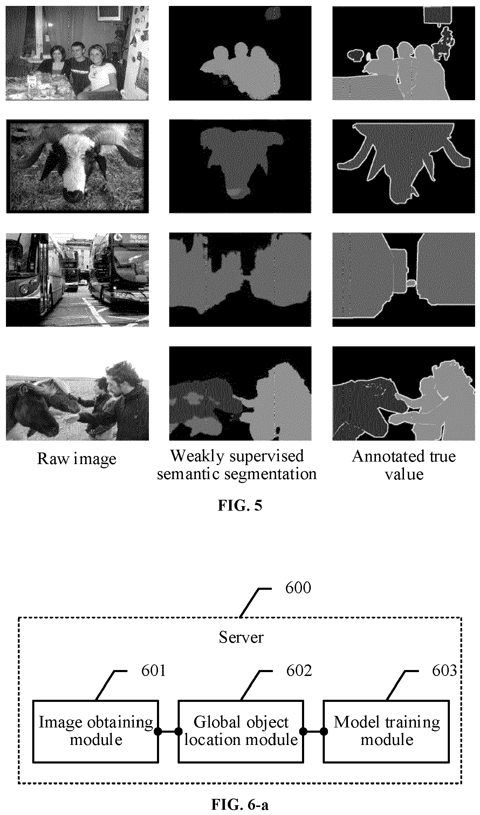

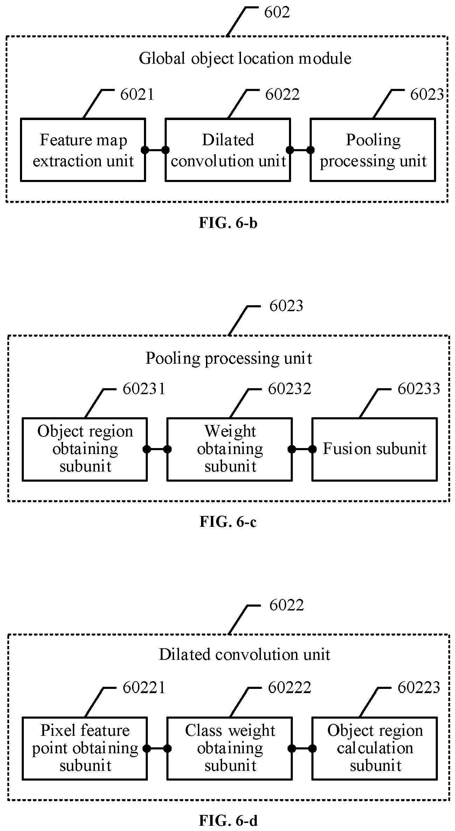

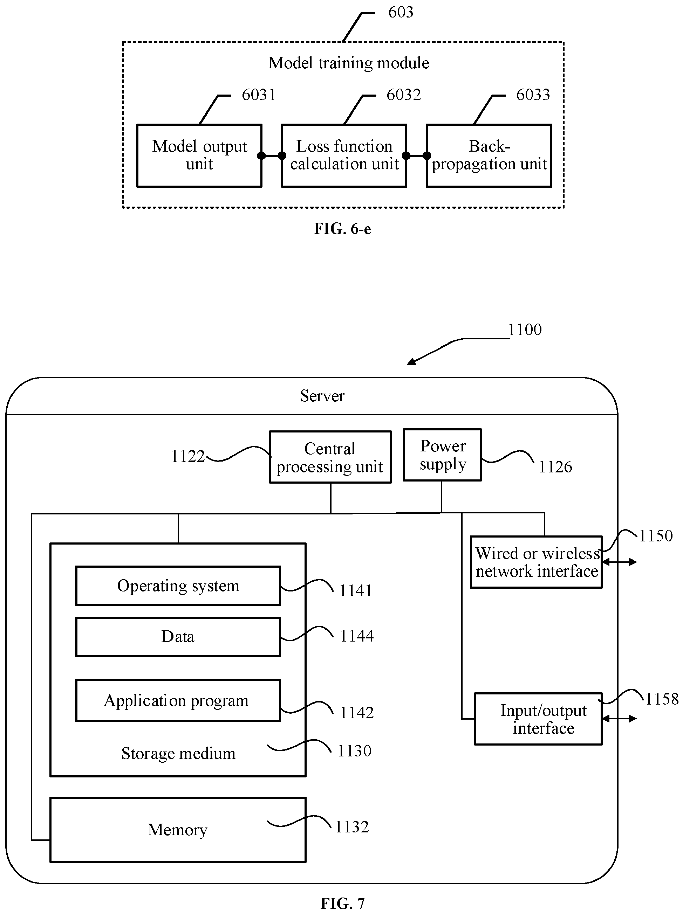

FIG. 6-b is a schematic structural diagram showing components of a global object location module according to an embodiment of the present disclosure;

FIG. 6-c is a schematic structural diagram showing components of a pooling processing unit according to an embodiment of the present disclosure;

FIG. 6-d is a schematic structural diagram showing components of a dilated convolution unit according to an embodiment of the present disclosure;

FIG. 6-e is a schematic structural diagram showing components of a model training module according to an embodiment of the present disclosure; and

FIG. 7 is a schematic structural diagram showing components of a server to which a training method for an image semantic segmentation model is applied according to an embodiment of the present disclosure.

## DESCRIPTION OF EMBODIMENTS

A training method for an image semantic segmentation model and a server are provided according to the embodiments of the present disclosure, to locate all object regions from a raw image, thereby improving the segmentation quality of image semantic segmentation. The method may be applied to a server; and the server may be a service device that has a data processing capability and that is located at a network side. In a case that a terminal device has a sufficient data processing capability, the method may also be applied to the terminal device, and the terminal device may be a computing device such as a personal computer (PC) or a smart terminal that has a data processing capability and that is located at a user side.

To make the invention objectives, features, and advantages of the present disclosure clearer and more comprehensible, the following clearly and completely describes the technical solutions in the embodiments of the present disclosure with reference to the accompanying drawings in the embodiments of the present disclosure. Apparently, the embodiments described below are merely a part rather than all of the embodiments of the present disclosure. All other embodiments obtained by persons skilled in the art based on the embodiments of the present disclosure shall fall within the protection scope of the present disclosure.

In the specification, claims, and the foregoing drawings of the present disclosure, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Detailed descriptions are separately provided below.

An embodiment of the training method for an image semantic segmentation model provided in the embodiments of the present disclosure may be applied to a full-image classification annotation on an image based on a dilated convolutional neural network model. The training method for an image semantic segmentation model provided in the embodiments of the present disclosure uses a weakly supervised image semantic segmentation technology, may be applied to a situation lack of data finely segmented and annotated at a pixel level, and depends on only the full-image classification annotation, to implement highly accurate image segmentation. In the embodiments of the present disclosure, global object location maps corresponding to the full-image classification annotation in the image are obtained based on the full-image classification annotation mainly by using a dilated convolutional neural network model. Specifically, first, a multi-magnification dilated convolutional neural network model is trained to implement full-image classification, and after the network model is obtained, the global object location maps corresponding to the full-image classification annotation in the raw image are precisely located through multi-magnification dilated convolution. Then, the located global object location maps are used as supervision information for segmentation, to train the image semantic segmentation network model to implement image segmentation. In the training method for an image semantic segmentation model provided in the embodiments of the present disclosure, images with annotations created by users may be automatically crawled from a website with massive user data, and may be used for training a weakly supervised image semantic segmentation network to implement image semantic segmentation. A semantic segmentation result may be used in search by image based on image content on a website, personalized recommendations based on image content analysis, and the like.

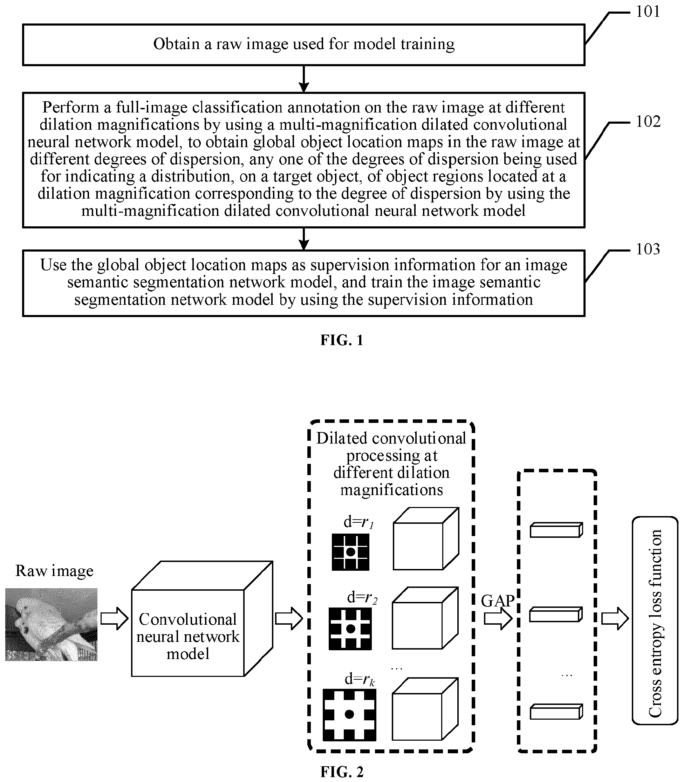

Referring to FIG. 1, the training method for an image semantic segmentation model provided in an embodiment of the present disclosure may include the following steps 101 to 103.

In step 101, a raw image for model training is obtained.

In this embodiment of the present disclosure, a training sample image library may store training sample images, and these images may be used for model training. That is, these images may be referred to as raw images for model training, and are briefly referred to as raw images in subsequent embodiments. A raw image includes one or more target objects, and the target object may be an object in a variety of shapes, for example, a tool, an animal, or a person, which is not limited herein. It is to be noted that, in the embodiments of the present disclosure, the raw images may be stored in multiple manners. For example, the server receives a raw image from a client and stores the raw image in a database of the server, or the server reads a raw image in an internal memory in real time, to improve model training efficiency.

In step 102, a full-image classification annotation is performed on the raw image at different dilation magnifications by using a multi-magnification dilated convolutional neural network model, to obtain global object location maps in the raw image at different degrees of dispersion, any one of the degrees of dispersion indicating a distribution, on a target object, of object regions located at a dilation magnification corresponding to the degree of dispersion by using the multi-magnification dilated convolutional neural network model.

In the embodiments of the present disclosure, full-image classification is performed by using a convolutional neural network model, and the convolutional neural network used in the embodiments of the present disclosure uses dilated convolutions of multiple dilation magnifications. Therefore, the convolutional neural network model used in the embodiments of the present disclosure may also be referred to as a multi-magnification dilated convolutional neural network model. In the embodiments of the present disclosure, first, the multi-magnification dilated convolutional neural network model may be trained to implement full-image classification, and after the network model is obtained, global object location maps corresponding to the full-image classification annotation in a training image are precisely located through multi-magnification dilated convolution. The multi-magnification dilated convolutional neural network model used in the embodiments of the present disclosure may achieve the full-image classification, and overcome the defects in the conventional technology that the convolutional neural network can only locate some most discriminative regions of the object. Therefore, global object location maps in the raw image at different degrees of dispersion can be located by using the multi-magnification dilated convolutional neural network model provided in the embodiments of the present disclosure.

It is to be notated that, in the foregoing embodiment of the present disclosure, the full-image classification annotation may be performed on the raw image at different dilation magnifications by using the multi-magnification dilated convolutional neural network model, to obtain global object location maps at different degree of dispersion, and the full-image classification annotation may be performed on the raw image at a dilation magnification by using the multi-magnification dilated convolutional neural network model, to obtain a global object location map at a degree of dispersion. That is, the dilation magnification of the multi-magnification dilated convolutional neural network model is in a correspondence with the degree of dispersion of the global object location map.

The degree of dispersion indicates a distribution, on a target object, of object regions located by using the multi-magnification dilated convolutional neural network model. In the object regions located by using the multi-magnification dilated convolutional neural network model, high response object regions corresponding to the full-image classification annotation in the raw image may be obtained by using a class activation map (CAM). Different degrees of dispersion refer to distributions of the located high response object regions on a real object. If the high response object regions are more concentrated on a small part of the target object, a value of the degree of dispersion is lower, and if the high response object regions are distributed on the entire target object, the value of the degree of dispersion is higher. In this embodiment of the present disclosure, full-image classification annotations of different dilation magnifications may be performed on the raw image by using the multi-magnification dilated convolutional neural network model, to obtain global object location maps in the raw image at different degrees of dispersion. Therefore, not only some most discriminative regions of the target object, but also other regions that are less discriminative can be located with the global object location maps, to locate all regions of the target object.

In the embodiments of the present disclosure, step 102 of performing a full-image classification annotation on the raw image by using a multi-magnification dilated convolutional neural network model, to obtain global object location maps in the raw image at different degrees of dispersion includes:

extracting a feature map of the target object from the raw image by using first N-1 convolutional layers in the multi-magnification dilated convolutional neural network model, the multi-magnification dilated convolutional neural network model including: N convolutional layers, where an $N^{th}$ convolutional layer is a multi-magnification dilated convolutional layer, and N is a positive integer;

performing dilated convolution processing on the feature map of the target object at multiple dilation magnifications d separately by using the multi-magnification dilated convolutional layer, to obtain object regions at different degrees of dispersion, where d is a positive integer; and

performing global average pooling processing on the object regions at different degrees of dispersion, to obtain the global object location maps in the raw image at different degrees of dispersion.

The multi-magnification dilated convolutional neural network model used in the embodiments of the present disclosure includes a total of N convolutional layers. The feature map of the target object is extracted from the raw image by using the first N-1 convolutional layers, the N$^{th}$ convolutional layer is the last convolutional layer, and the N$^{th}$ convolutional layer is a multi-magnification dilated convolutional layer. That is, the N$^{th}$ convolutional layer uses a multi-magnification dilated convolution, and the number of the convolutional layers N of the multi-magnification dilated convolutional neural network model may be determined according to a specific scenario. In the embodiments of the present disclosure, locating an object by using dilated convolution is advantageous in being not limited to the most discriminative part. The multi-magnification dilated convolutional neural network model is used, in which a multi-magnification dilated convolutional layer is introduced subsequent to the last layer of the conventional convolutional neural network model. The multi-magnification dilated convolutional layer simultaneously uses dilated convolutions of multiple dilation magnifications (for example, d=ri, $r_2...r_k$) to perform convolution operations, to learn the object regions at different degrees of dispersion, and then perform global average pooling (GAP) processing, to obtain global object location maps at different degrees of dispersion. The global object location maps include the entire region of the target object.

Further, in the embodiments of the present disclosure, the performing global average pooling processing on the object regions at different degrees of dispersion, to obtain the global object location maps in the raw image at different degrees of dispersion includes:

obtaining a first object region in a case that the dilation magnification is 0, and a second object region in a case that the dilation magnification is greater than 0;

obtaining a first weight corresponding to the first object region, and a second weight corresponding to the second object region, where the first weight is greater than the second weight; and

fusing the first object region and the second object region at different degrees of dispersion according to the first weight and the second weight, to obtain the global object location map.

The multi-magnification dilated convolutional layer is used to separately perform dilated convolution processing on the feature map of the target object at multiple dilation magnifications d. An object region obtained when the dilation magnification is 0 is referred to as the first object region, and an object region obtained when the dilation magnification is greater than 0 is referred to as the second object region. Finally, object regions with different weights are fused, and the weight of the object region whose magnification is 0 is set to be greater than that of an object region of another magnification in the fusion process because a wrong object region may be located through the dilated convolution. Only when at least two object regions are located at the same region, it can be concluded that the region is a correct effective object region. Therefore, in the embodiments of the present disclosure, a greater weight may be fixedly assigned to an object region located by using convolution without dilation other than object regions located by using multi-magnification dilated convolution, so that it can be avoided that a correct most discriminative object region located by the convolution without dilation is filtered out by an average operation of the object region located by using convolution with a dilation. With this fusion manner, a highly accurate object location region can be obtained and used as high-quality supervision information for image segmentation to train an image semantic segmentation network subsequently.

Next, the manner of fusing different object regions according to weights in this embodiment of the present disclosure is described by using an example. Further, the fusing the first object region and the second object region at different degrees of dispersion according to the first weight and the second weight, to obtain the global object location map includes:

determining the first object region $H_0$ in a case that d is equal to 0, and the second object region $(H_1, H_2, ..., H_k)$ in a case that d is greater than 0 and less than or equal to k, where k is a maximum value of the dilation magnification;

fusing the first object region $H_0$ and the second object region $(H_1, H_2, ..., H_k)$ at different degrees of dispersion in the following manner, to obtain the global object location map H :

$$H = H_0 + \frac{1}{k}\sum_{i=1}^{k} H_i,$$

where

$$\frac{1}{k}$$

the first weight is 1, the second weight is $\frac{1}{k}$, and $H_i$ represents an $i^{th}$ object region in the second object region $(H_1, H_2, ..., H_k)$.

The multi-magnification dilated convolutional neural network model may be used to obtain the object regions at different dilation magnifications, and the second object region includes the object region $(H_1, H_2, ..., H_k)$ that may be generated for a dilated convolution of each dilation magnification. When d=0, the first object region $H_0$ corresponding to the convolution without dilation. The final global object location map H is the fusion of all object regions in at different magnifications of dilated convolutions.

In the fusion process H according to the above equation, the first weight is 1, and the second weight is $\frac{1}{k}$. In an actual application scenario, weights separately corresponding to the first object region and the second object region may be set according to the scenario.

In an embodiment of the present disclosure, the performing dilated convolution processing on the feature map of the target object at multiple dilation magnifications d separately by using the multi-magnification dilated convolutional layer, to obtain object regions at different degrees of dispersion includes:

obtaining a pixel feature point whose coordinates are (x, y) on a $t^{th}$ feature map of the multi-magnification dilated convolutional layer, where t is a positive integer;

obtaining a weight $w_{t,d}^c$ of connecting the $t^{th}$ feature map to a $c^{th}$ class at a dilation magnification d, where c is a positive integer; and

calculating an object region $H_d^c$ corresponding to the $c^{th}$ class at the dilation magnification d in the following manner:

$$H_d^{\ c} = \sum_t \sum_{x,y} w_{t,d}^c f_t(x,y).$$

At each dilation magnification, high response object regions corresponding to the full-image classification annotation in the raw image is obtained by using the multi-magnification dilated convolutional layer in combination with the class activation map. Assuming that $f_k(x,y)$ is a value at the coordinates (x, y) on a $k^{th}$ feature map of the last convolutional layer, and $w_k^c$ is a weight of connecting the $k^{th}$ feature map to the $c^{th}$ class, the object region $H_d^c$ corresponding to the $c^{th}$ class may be calculated according to the above equation.

In step 103, the global object location maps are used as supervision information for an image semantic segmentation network model, and the image semantic segmentation network model is trained by using the supervision information.

In this embodiment of the present disclosure, after the global object location maps in the raw image at different degrees of dispersion are obtained by using the multi-magnification dilated convolutional neural network model, and the located global object location maps are used as supervision information for segmentation, to train an image semantic segmentation network model to implement image segmentation. For example, the image semantic segmentation network model provided in this embodiment of the present disclosure may be a deep convolutional neural network model. The located global object location maps are used as the supervision information to train the deep convolutional neural network model to implement image segmentation. In this embodiment of the present disclosure, in the process of training the image semantic segmentation network model, sizes of used convolutional kernels and pooling kernels may be selected according to specific scenarios, which are not limited herein. Because in this embodiment of the present disclosure, the global object location maps are used as the supervision information for the image semantic segmentation network model, and the global object location maps include a highly accurate object location region and can be used as high-quality supervision information for image segmentation to train the image semantic segmentation network model. A semantic segmentation result may be used in search by image based on image content on a website, personalized recommendations based on image content analysis, and the like.

In some embodiments of the present disclosure, step 103 of using the global object location maps as supervision information for an image semantic segmentation network model, and training the image semantic segmentation network model by using the supervision information includes:

inputting the raw image into the image semantic segmentation network model, to obtain an image classification result by using the image semantic segmentation network model;

calculating a cross entropy loss function according to the image classification result and the global object location maps, to obtain a loss result; and

back-propagating the loss result to all layers of the image semantic segmentation network model, to continue to train the image semantic segmentation network model.

The image classification result is obtained by using the image semantic segmentation network model, and the across entropy loss function is calculated based on the result when the supervision information of the full-image classification annotation is given. The cross entropy loss function may be a sigmoid function. Then, the loss result is returned to all layers of the image semantic segmentation network model through back-propagation to train network parameters. After the image semantic segmentation network model is trained, all the layers of the image semantic segmentation network model may be used for outputting image semantics for an input image.

It can be known from the description for the embodiments of the application through the foregoing embodiments that, first, a raw image for model training is obtained, then, a full-image classification annotation is performed on the raw image by using a multi-magnification dilated convolutional neural network model, to obtain global object location maps in the raw image at different degrees of dispersion, the degree of dispersion indicating a distribution, on a target object, of object regions located by using the multi-magnification dilated convolutional neural network model, and finally, the global object location maps are used as supervision information for an image semantic segmentation network model, and the image semantic segmentation network model is trained by using the supervision information. In this embodiment of the present disclosure, because the full-image classification annotation is performed on the raw image by using the multi-magnification dilated convolutional neural network model, global object location maps at different degrees of dispersion can be located from the raw image through a multi-magnification dilated convolution of the multi-magnification dilated convolutional neural network model. The global object location maps include all regions of the target object. Therefore, in this embodiment of the present disclosure, all object regions corresponding to the full-image classification annotation in the raw image are precisely located by the multi-magnification dilated convolutional neural network model, thereby improving the segmentation quality of image semantic segmentation.

For better understanding and implementing the foregoing solutions of the embodiments of the present disclosure, descriptions are provided below by using examples of corresponding application scenarios.

In the embodiments of the present disclosure, the raw image for model training may have multiple sources. For example, images with annotations created by users may be automatically crawled from a website with massive user data, and may be used for training a weakly supervised image semantic segmentation network to implement image semantic segmentation. A semantic segmentation result may be used in search by image based on image content on a website, personalized recommendations based on image content analysis, and the like.

The embodiments of the present disclosure include using a multi-magnification dilated convolutional neural network model to achieve the full-image classification. The network model can overcome the defects that the convolutional neural network can only locate some most discriminative regions in the object. In the embodiments of the present disclosure, not only some most discriminative regions of the object, but also other regions that are less discriminative can be located by using the multi-magnification dilated convolutional neural network model, to locate all object regions. Then, all the located object regions are used as supervision information, to train an image semantic segmentation network model to implement image segmentation.

In the embodiments of the present disclosure, a multi-magnification dilated convolutional neural network may be used to locate all object regions, that is, to generate global object location maps. FIG. 2 is a schematic structural diagram of a multi-magnification dilated convolutional network model according to an embodiment of the present disclosure. Locating an object by using a dilated convolution is advantageous in being not limited to the most discriminative part. The multi-magnification dilated convolutional neural network model is provided according to the embodiment of the present disclosure, in which a multi-magnification dilated convolutional layer is introduced subsequent to the last layer of the convolutional neural network model. The multi-magnification dilated convolutional layer simultaneously uses dilated convolutions of multiple dilation magnifications ($d=r_1, r_2...r_k$) to perform convolution operations, to learn object regions at different degrees of dispersion, and then perform global average pooling processing, to obtain global object features at different degrees of dispersion. Then, the features are fused to obtain a final image classification result, and a cross entropy loss function is calculated based on the result when the supervision information of the full-image classification annotation is given. Then, the loss is returned to all layers of the network through back-propagation to train network parameters.

In some embodiments of the present disclosure, the object location map ($H_1, H_2, ..., H_k$) shown in FIG. 2 may be generated for a dilated convolution of each dilation magnification by using the multi-magnification dilated convolutional network model. When d=0, an object location map $H_0$ corresponding to a convolution without a dilation magnification may be generated. The final global object location map H is the fusion of all location maps at different magnifications of dilated convolutions:

$$H = H_0 + \frac{1}{k} \sum_{i=1}^{k} H_i.$$

It is to be noted that, in the embodiments of the present disclosure, in the foregoing fusion process, the weight of the location map obtained by using convolution without a dilation magnification (d=0) is set to be greater than that of a location map at another magnification, because a wrong object region may be located through the dilated convolution. Only when at least two object location maps are located at the same region, it can be concluded that the region is a correct effective object region. Therefore, a greater weight may be fixedly assigned to a location map located by using convolution without a dilation magnification other than a location map located by using multi- magnification dilated convolution, so that it can be avoided that a correct most discriminative part located by using a convolution without a dilation magnification is filtered out by an average operation of a location map located by using convolution with a dilation magnification. With this fusion manner, a highly accurate object location region can be obtained and used as high-quality supervision information for image segmentation to train an image semantic segmentation network subsequently.

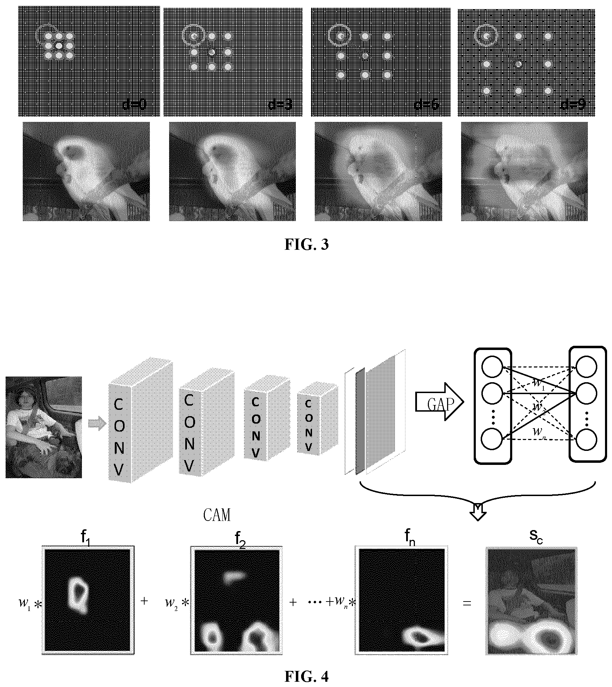

FIG. 3 is a schematic diagram of a process of obtaining an object region in an image at a dilation magnification by using a deep convolutional neural network model according to an embodiment of the present disclosure. In the embodiments of the present disclosure, high response object regions corresponding to the full-image classification annotation in the raw image is obtained by using the deep convolutional neural network model in combination with the class activation map. Assuming that $f_k(x, y)$ is a value at the coordinates (x, y) on a k$^{th}$ feature map of the last convolutional layer, and $w_k^c$ is a weight of connecting the k$^{th}$ feature map to a c$^{th}$ class, corresponding to the c$^{th}$ class of the class activation map (CAM), the following may be acquired:

$$S_c = \sum_k w_k^c \sum_{x,y} f_k(x, y) = \sum_k \sum_{x,y} w_k^c f_k(x, y).$$

A difference between a convolution with a dilation magnification and a convolution without a dilation magnification is shown in FIG. 4, which is a schematic diagram of dilated convolutions of different dilation magnifications and corresponding object regions located in an image according to an embodiment of the present disclosure. The convolution without a dilation magnification may be regarded as a dilated convolution with d=0. It can be seen from FIG. 4 that, because of a smaller receptive field of a network, the object regions located by the using convolution without a dilation magnification is usually concentrated on a most discriminative part, and because of a larger receptive field, the object regions located by the convolution with a dilation magnification is more dispersed, and a greater d indicates more dispersed regions. d=0 is a dilation magnification of a dilated convolution, and it may be regarded that there is no dilation magnification, that is, a conventional convolutional neural network. If d>0, there is a dilation magnification, that is, a dilated convolutional neural network.

FIG. 5 is a schematic diagram of a network segmentation result of weakly supervised image classification annotation training according to an embodiment of the present disclosure. In this embodiment of the present disclosure, image data with annotations created by massive users on the internet is used to train a fine image semantic segmentation network, massive image data that cannot be used previously is effectively used, and costs of manual annotation for the image segmentation are correspondingly reduced, providing potential economic values for the image semantic segmentation and applications thereof. The image segmentation effect obtained by using the technology is shown in FIG. 5, and it can be seen that the segmentation quality close to a fully supervised annotation can be obtained only based on a weakly supervised annotation.

The embodiments of the present disclosure are not only suitable for the multi-magnification dilated convolutional network described above, but also suitable for other multi-scale convolutional networks, including convolutions with convolutional kernels of multiple sizes, and pooling with pooling kernels of multiple sizes.

For simple descriptions, the foregoing method embodiments are stated as a series of action combinations. However, it is to be appreciated by persons skilled in the art that the present disclosure is not limited to the sequence of the described actions because according to the present disclosure, some steps may use another sequence or may be simultaneously performed.

To better implement the foregoing solutions of the embodiments of the present disclosure, related apparatuses used to implement the foregoing solutions are further provided below.

Referring to FIG. 6-a, a server 600 provided in an embodiment of the present disclosure may include: an image obtaining module 601, a global object location module 602, and a model training module 603.

The image obtaining module 601 is configured to obtain a raw image for model training.

The global object location module 602 is configured to perform a full-image classification annotation on the raw image by using a multi-magnification dilated convolutional neural network model, to obtain global object location maps in the raw image at different degrees of dispersion, the degree of dispersion indicating a distribution, on a target object, of object regions located by using the multi-magnification dilated convolutional neural network model.

The model training module 603 is configured to use the global object location maps as supervision information for an image semantic segmentation network model, and train the image semantic segmentation network model by using the supervision information.

In the embodiments of the present disclosure, referring to FIG. 6-b, the global object location module 602 includes a feature map extraction unit 6021, a dilated convolution unit 6022, and a pooling processing unit 6023.

The feature map extraction unit 6021 is configured to extract a feature map of the target object from the raw image by using first N-1 convolutional layers in the multi-magnification dilated convolutional neural network model, the multi-magnification dilated convolutional neural network model including: N convolutional layers, where an $N^{th}$ convolutional layer is a multi-magnification dilated convolutional layer, and N is a positive integer.

The dilated convolution unit 6022 is configured to perform dilated convolution processing on the feature map of the target object at multiple dilation magnifications d separately by using the multi-magnification dilated convolutional layer, to obtain object regions at different degrees of dispersion, where d is a positive integer.

The pooling processing unit 6023 is configured to perform global average pooling processing on the object regions at different degrees of dispersion, to obtain the global object location maps in the raw image at different degrees of dispersion.

In the embodiments of the present disclosure, referring to FIG. 6-c, the pooling processing unit 6023 includes an object region obtaining subunit 60231, a weight obtaining subunit 60232, and a fusion subunit 60233.

The object region obtaining subunit 60231 is configured to obtain a first object region in a case that the dilation magnification is 0, and a second object region in a case that the dilation magnification is greater than 0.

The weight obtaining subunit 60232 is configured to obtain a first weight corresponding to the first object region, and a second weight corresponding to the second object region, where the first weight is greater than the second weight.

The fusion subunit 60233 is configured to fuse the first object region and the second object region at different degrees of dispersion according to the first weight and the second weight, to obtain the global object location map.

In some embodiments of the present disclosure, the fusion subunit 60233 is specifically configured to determine the first object region $H_0$ in a case that d is equal to 0, and the second object region $(H_1, H_2, ..., H_k)$ in a case that d is greater than 0 and less than or equal to k, where k is a maximum value of the dilation magnification; and fuse the first object region $H_0$ and the second object region $(H_1, H_2, ..., H_k)$ at different degrees of dispersion in the following manner, to obtain the global object location map H :

$$H = H_0 + \frac{1}{k} \sum_{i=1}^{k} H_i,$$

where

the first weight is 1, the second weight is $\frac{1}{k}$ , and $H_i$ represents an $i^{th}$ object region in the second object region $(H_1, H_2, ..., H_k)$.

In some embodiments of the present disclosure, referring to FIG. 6-d, the dilated convolution unit 6022 includes a pixel feature point obtaining subunit 60221, a class weight obtaining subunit 60222, and an object region calculation subunit 60223.

The pixel feature point obtaining subunit 60221 is configured to obtain a pixel feature point $f_t(x, y)$ whose coordinates are (x, y) on a $t^{th}$ feature map of the multi-magnification dilated convolutional layer, where t is a positive integer.

The class weight obtaining subunit 60222 is configured to obtain a weight $w_{t,d}^c$ of connecting the t$^{th}$ feature map to a c$^{th}$ class at the dilation magnification d, where c is a positive integer.

The object region calculation subunit 60223, configured to calculate an object region $H_d^c$ corresponding to the c$^{th}$ class at the dilation magnification d in the following manner:

$$H_d^c = \sum_t \sum_{x,y} w_{t,d}^c f_t(x, y).$$

In some embodiments of the present disclosure, referring to FIG. 6-e, the model training module 603 includes a model output unit 6031, a loss function calculation unit 6032, and a back-propagation unit 6033.

The model output unit 6031 is configured to input the raw image into the image semantic segmentation network model, and obtain an image classification result by using the image semantic segmentation network model.

The loss function calculation unit 6032 is configured to calculate a cross entropy loss function according to the image classification result and the global object location maps, to obtain a loss result.

The back-propagation unit 6033 is configured to back-propagate the loss result to all layers of the image semantic segmentation network model, to continue to train the image semantic segmentation network model.

In some embodiments of the present disclosure, the image semantic segmentation network model is a deep convolutional neural network model.

It can be known from the description for the embodiments of the application description that, first, a raw image for model training is obtained, then, a full-image classification annotation is performed on the raw image by using a multi-magnification dilated convolutional neural network model, to obtain global object location maps in the raw image at different degrees of dispersion, the degree of dispersion indicating a distribution, on a target object, of object regions located by using the multi-magnification dilated convolutional neural network model, and finally, the global object location maps are used as supervision information for an image semantic segmentation network model, and the image semantic segmentation network model is trained by using the supervision information. In this embodiment of the present disclosure, because the full-image classification annotation is performed on the raw image by using the multi-magnification dilated convolutional neural network model, global object location maps at different degrees of dispersion can be located from the raw image through a multi-magnification dilated convolution of the multi-magnification dilated convolutional neural network model. The global object location maps includes all regions of the target object. Therefore, in this embodiment of the present disclosure, all object regions corresponding to the full-image classification annotation in the raw image are precisely located by the multi-magnification dilated convolutional neural network model, thereby improving the segmentation quality of image semantic segmentation.

FIG. 7 is a schematic structural diagram of a server according to an embodiment of the present disclosure. The server 1100 may vary greatly due to different configurations or performance, and may include one or more central processing units (CPUs) 1122 (for example, one or more processors) and a memory 1132, and one or more storage media 1130 (for example, one or more mass storage devices) that store an application program 1142 or data 1144. The memory 1132 and the storage medium 1130 may be transient storages or persistent storages. The program stored in the storage medium 1130 may include one or more modules (which is not marked in the figure), and each module may include a series of instruction and operations to the server. Still further, the CPU 1122 may be configured to communicate with the storage medium 1130, and perform, on the server 1100, a series of instructions and operations in the storage medium 1130.

The server 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, and FreeBSDTM.

The steps of the training method for an image semantic segmentation model performed by the server in the foregoing embodiments may be based on the server structure shown in FIG. 7.

In addition, an embodiment of the present disclosure further provides a storage medium. The storage medium is used for storing program code, and the program code is used for performing the method provided in the foregoing embodiments.

An embodiment of the present disclosure further provides a computer program product including an instruction. The instruction, when run on a server, causes the server to perform the method in the foregoing embodiments.

In addition, the described apparatus embodiment is merely exemplary. The units described as separate parts may or may not be physically separate, and parts displayed as units may or may not be physical units, may be located in one position, or may be distributed on multiple network units. Some or all modules thereof may be selected based on an actual requirement, to implement an objective of the solution in this embodiment. In addition, in the accompanying drawings of the apparatus embodiments provided in the present disclosure, connection relationships between modules indicate that the modules have communication connections with each other, which may be specifically implemented as one or more communications buses or signal cables. Persons of ordinary skill in the art may understand and implement the objective without creative efforts.

Based on the descriptions of the foregoing implementations, persons skilled in the art may clearly understand that the present disclosure may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve the same function may be of various forms, for example, in a form of an analog circuit, a digital circuit, or a dedicated circuit. However, as for the present disclosure, software program implementation is a better implementation in most cases. Based on such an understanding, the technical solutions of the present disclosure essentially or the part contributing to the existing technology may be implemented in a form of a software product. The computer software product is stored in a readable storage medium, such as a floppy disk, a USB flash drive, a removable hard disk, a read-only memory (ROM), a random access memory (RAM), a magnetic disk, or an optical disc of a computer, and includes several instructions for instructing a computer device (which may be a personal computer, a server, a network device, and the like) to perform the methods described in the embodiments of the present disclosure.

In conclusion, the foregoing embodiments are merely intended for describing the technical solutions of the present disclosure, but not for limiting the present disclosure. Although the present disclosure is described in detail with reference to the foregoing embodiments, it is to be understood by persons of ordinary skill in the art that they may still make modifications to the technical solutions described in the foregoing embodiments or make equivalent replacements to some technical features thereof, without departing from the scope of the claims.

**Claims**

1. A training method for an image semantic segmentation model, performed by a server, the method comprising:

   obtaining a raw image for model training;
   performing a full-image classification annotation on the raw image at different dilation rates by using a multi-rate dilated convolutional neural network model, to obtain a global object location map corresponding to the raw image, wherein the multi-rate dilated convolutional neural network model is a convolutional neural network configured to perform dilated convolution at multiple dilation rates, and the multi-rate dilated convolutional neural network model comprises N convolutional layers, an $N^{th}$ convolutional layer being a multi-rate dilated convolutional layer configured to simultaneously perform dilated convolution at multiple dilation rates, and N being a positive integer, and wherein
   the performing a full-image classification annotation on the raw image at different dilation rates by using a multi-rate dilated convolutional neural network model, to obtain a global object location map corresponding to the raw image comprises:

      extracting a feature map of the target object from the raw image by using first N-1 convolutional layers in the multi-rate dilated convolutional neural network model;
      performing dilated convolution processing on the feature map of the target object at a plurality of dilation rates d separately by using the multi-rate dilated convolutional layer, to obtain object regions at different degrees of dispersion, wherein d is a positive integer, any one of the degrees of dispersion indicating a distribution of object regions that is on a target object and that is obtained at a dilation rate corresponding to the degree of dispersion by using the multi-rate dilated convolutional neural network model, a lower value of the degree of dispersion corresponds to more concentrated distribution of the object regions on a small part of the target object, and a higher value of the degree of dispersion corresponds to more dispersed distribution of the object regions on the entire target object;
      obtaining a first object region in a case that the dilation rate is 0, and a second object region in a case that the dilation rate is greater than 0;
      obtaining a first weight corresponding to the first object region, and a second weight corresponding to the second object region, wherein the first weight is greater than the second weight; and
      fusing the first object region and the second object region at different degrees of dispersion according to the first weight and the second weight, to obtain the global object location map; and

   using the global object location map as supervision information for an image semantic segmentation network model, and training the image semantic segmentation network model by using the supervision information.

2. The method according to claim 1, wherein the fusing the first object region and the second object region at different degrees of dispersion according to the first weight and the second weight, to obtain the global object location map comprises:

determining the first object region $H_0$ in a case that d is equal to 0, and the second object region ($H_1,H_2,...,H_k$) in a case that d is greater than 0 and less than or equal to k, wherein k is a maximum value of the dilation rate; and fusing the first object region $H_0$ and the second object region ($H_1,H_2,...,H_k$) at different degrees of dispersion in the following manner, to obtain the global object location map $H$:

$$H = H_0 + \frac{1}{k}\sum_{i=1}^{k} H_i,$$

wherein

the first weight is 1, the second weight is $\dfrac{1}{k}$, and $H_i$ represents an $i^{th}$ object region in the second object region ($H_1,H_2,...,H_k$).

3. The method according to claim 1, wherein the performing dilated convolution processing on the feature map of the target object at a plurality of dilation rates d separately by using the multi-rate dilated convolutional layer, to obtain object regions at different degrees of dispersion comprises:

obtaining a pixel feature point $f_t(x,y)$ whose coordinates are (x, y) on a $t^{th}$ feature map of the multi-rate dilated convolutional layer, wherein t is a positive integer;

obtaining a weight $w_{t,d}^c$ of connecting the $t^{th}$ feature map to a $c^{th}$ class at the dilation rate d, wherein c is a positive integer; and
calculating an object region $H_d^c$ corresponding to the $c^{th}$ class at the dilation rate d in the following manner:

$$H_d^c = \sum_t \sum_{x,y} w_{t,d}^c f_t(x, y).$$

4. The method according to any one of claims 1 to 3, wherein the using the global object location map as supervision information for an image semantic segmentation network model, and training the image semantic segmentation network model by using the supervision information comprises:

inputting the raw image into the image semantic segmentation network model, to obtain an image classification result by using the image semantic segmentation network model;
calculating a cross entropy loss function according to the image classification result and the global object location maps, to obtain a loss result; and
back-propagating the loss result to all layers of the image semantic segmentation network model, to continue to train the image semantic segmentation network model.

5. The method according to any one of claims 1 to 3, wherein the image semantic segmentation network model comprises a deep convolutional neural network model.

6. A computer-readable storage medium comprising an instruction, the instruction, when run on a computer, causing the computer to perform the method according to any one of claims 1 to 5.

7. A server, comprising:

a processor, a communications interface, a memory, and a communications bus,

the processor, the communications interface, and the memory implementing mutual communication through the communications bus; and the communications interface being an interface of a communications module; the memory being configured to store program code, and transmit the program code to the processor; and the processor being configured to invoke an instruction of the program code in the memory to perform the method according to any one of claims 1 to 5.

**8.** A computer program product comprising an instruction, the instruction, when run on a computer, causing the computer to perform the method according to any one of claims 1 to 5.

**Patentansprüche**

**1.** Trainingsverfahren für ein semantisches Bildsegmentierungsmodell, das von einem Server durchgeführt wird, wobei das Verfahren umfasst:

Erhalten eines Rohbildes für das Training des Modells;
Durchführen einer Vollbild-Klassifizierungsanmerkung auf dem Rohbild bei verschiedenen Dilatationsraten unter Verwendung eines multi-Raten dilatierten Convolutional Neural Network-Modells, um eine globale Objektpositionskarte zu erhalten, die dem Rohbild entspricht, wobei das multi-Raten dilatierte Convolutional Neural Network Modell ein Convolutional Neural Network ist, das ausgebildet ist, um eine dilatierte Faltung bei mehreren Dilatationsraten durchzuführen, und das multi-Raten dilatierte Convolutional Neural Network-Modell N Faltungsschichten umfasst, wobei eine N-te Faltungsschicht eine multi-Raten dilatierte Faltungsschicht ist, die so ausgebildet ist, dass sie gleichzeitig eine dilatierte Faltung mit mehreren Dilatationsraten durchführt, und N eine positive ganze Zahl ist, und wobei
das Durchführen einer Vollbildklassifizierungsanmerkung auf dem Rohbild bei verschiedenen Dilatationsraten unter Verwendung eines multi-Raten dilatierten Convolutional Neural Network-Modells, um eine globale Objektpositionskarte entsprechend dem Rohbild zu erhalten, umfasst
Extrahieren einer Merkmalskarte des Zielobjekts aus dem Rohbild unter Verwendung erster N-1 Faltungsschichten in dem multi-Raten dilatierten Convolutional Neural Network-Modell;
separates Durchführen einer dilatierten Faltungsbearbeitung an der Merkmalskarte des Zielobjekts bei einer Vielzahl von Dilatationsraten d durch Verwenden der multi-Raten dilatierten Faltungsschicht, um Objektregionen bei verschiedenen Dispersionsgraden zu erhalten, wobei d eine positive ganze Zahl ist und jeder der Dispersionsgrade eine Verteilung von Objektregionen angibt, die sich auf einem Zielobjekt befindet und die bei einer Dilatationsrate entsprechend dem Dispersionsgrad durch Verwenden des multi-Raten dilatierten Convolutional Neural Network-Modells erhalten wird, ein kleinerer Wert des Dispersionsgrades einer konzentrierteren Verteilung der Objektregionen auf einem kleinen Teil des Zielobjekts entspricht, und ein höherer Wert des Dispersionsgrades einer verstreuteren Verteilung der Objektregionen auf dem gesamten Zielobjekt entspricht;
Erhalten einer ersten Objektregion in einem Fall, in dem die Dilatationsrate 0 ist, und einer zweiten Objektregion in einem Fall, in dem die Dilatationsrate größer als 0 ist;
Erhalten eines ersten Gewichts, das der ersten Objektregion entspricht, und eines zweiten Gewichts, das der zweiten Objektregion entspricht, wobei das erste Gewicht größer als das zweite Gewicht ist; und
Verschmelzen der ersten Objektregion und der zweiten Objektregion mit unterschiedlichen Dispersionsgraden gemäß dem ersten Gewicht und dem zweiten Gewicht, um die globale Objektpositionskarte zu erhalten; und
Verwenden der globalen Objektpositionskarte als Überwachungsinformation für ein semantisches Bildsegmentierungsnetzmodell und Trainieren des semantischen Bildsegmentierungsnetzmodells unter Verwendung der Überwachungsinformation.

**2.** Verfahren nach Anspruch 1, wobei das Verschmelzen der ersten Objektregion und der zweiten Objektregion mit unterschiedlichen Dispersionsgraden gemäß dem ersten Gewicht und dem zweiten Gewicht, um die globale Objektlagekarte zu erhalten, umfasst:

Bestimmen der ersten Objektregion $H_0$ in einem Fall, in dem d gleich 0 ist, und des zweiten Objektbereichs $(H_1, H_2, ..., H_k)$ in einem Fall, in dem d größer als 0 und kleiner als oder gleich k ist, wobei k ein Maximalwert der Dilatationsrate ist; und
Verschmelzen der ersten Objektregion $H_0$ und der zweiten Objektregion $(H_1, H_2, ..., H_k)$ bei verschiedenen Dispersionsgraden in der folgenden Weise, um die globale Objektpositionskarte zu erhalten $H$ :

$$H = H_0 + \frac{1}{k}\sum_{i=1}^{k}H_i \quad,$$

wobei

$$\frac{1}{k}$$

das erste Gewicht gleich 1 ist, das zweite Gewicht gleich $\frac{1}{k}$ ist und $H_i$ eine i-te Objektregion in der zweiten Objektregion ($H_1,H_2,...,H_k$) repräsentiert.

3. Verfahren nach Anspruch 1, wobei das Durchführen einer dilatierten Faltungsbearbeitung an der Merkmalskarte des Zielobjekts bei einer Vielzahl von Dilatationsraten d separat unter Verwendung der Multi-Raten dilatierten Faltungsschicht, um Objektregionen bei unterschiedlichen Dispersionsgraden zu erhalten, umfasst:

Erhalten eines Pixel-Merkmalspunktes $f_t(x,y)$ dessen Koordinaten (x, y) auf einer t-ten Merkmalskarte der Multi-Raten dilatierten Faltungsschicht sind, wobei t eine positive ganze Zahl ist;
Erhalten eines Gewichts $w_{t,d}^{c}$ des Verbindens der t-ten Merkmalskarte mit einer c-ten Klasse mit der Dilatationsrate d, wobei c eine positive ganze Zahl ist; und
Berechnen einer Objektregion $H_d^c$ entsprechend der c-ten Klasse mit der Dilatationsrate d auf die folgende Weise:

$$H_d^{\,c} = \sum_t \sum_{x,y} w_{t,d}^{c} f_t(x, y) \quad.$$

4. Verfahren nach einem der Ansprüche 1 bis 3, wobei das Verwenden der globalen Objektpositionskarte als Überwachungsinformation für ein semantisches Bildsegmentierungsnetzmodell und das Trainieren des semantischen Bildsegmentierungsnetzmodells unter Verwendung der Überwachungsinformation Folgendes umfasst:

Eingeben des Rohbildes in das semantische Bildsegmentierungsnetzmodell, um unter Verwendung des semantischen Bildsegmentierungsnetzmodells ein Bildklassifizierungsergebnis zu erhalten;
Berechnen einer Kreuzentropie-Verlustfunktion gemäß dem Bildklassifikationsergebnis und den globalen Objektpositionskarten, um ein Verlustergebnis zu erhalten; und
Rückpropagierung des Verlustergebnisses zu allen Schichten des semantischen Bildsegmentierungsnetzmodells, um das Trainieren des semantischen Bildsegmentierungsnetzmodells fortzusetzen.

5. Verfahren nach einem der Ansprüche 1 bis 3, wobei das Netzmodell für die semantische Bildsegmentierung ein Deep Convolutional Neural Network-Modell umfasst.

6. Computerlesbares Speichermedium, das einen Befehl enthält, wobei der Befehl, wenn er auf einem Computer ausgeführt wird, den Computer dazu veranlasst, das Verfahren nach einem beliebigen der Ansprüche 1 bis 5 auszuführen.

7. Server, aufweisend:

einen Prozessor, eine Kommunikationsschnittstelle, einen Speicher und einen Kommunikationsbus,
wobei der Prozessor, die Kommunikationsschnittstelle und der Speicher eine gemeinsame Kommunikation über den Kommunikationsbus implementieren; und wobei die Kommunikationsschnittstelle eine Schnittstelle eines Kommunikationsmoduls ist;
der Speicher so ausgebildet ist, dass er Programmcode speichert und den Programmcode an den Prozessor übergibt; und
der Prozessor so ausgebildet ist, dass er einen Befehl des Programmcodes im Speicher aufruft, um das Verfahren nach einem beliebigen der Ansprüche 1 bis 5 auszuführen.

8. Computerprogrammprodukt, das einen Befehl aufweist, wobei der Befehl, wenn er auf einem Computer ausgeführt wird, den Computer dazu veranlasst, das Verfahren nach einem beliebigen der Ansprüche 1 bis 5 durchzuführen.

**Revendications**

1. Procédé d'entraînement pour un modèle de segmentation sémantique d'images, qui est mis en oeuvre par un serveur, le procédé comprenant:

obtenir une image brute pour l'entraînement du modèle;
effectuer une annotation de classification d'image complète sur l'image brute à différents taux de dilatation en utilisant un modèle de réseau neuronal convolutif dilaté à taux multiples, pour obtenir une carte de position d'objet globale correspondant à l'image brute, dans lequel le modèle de réseau neuronal convolutif dilaté à taux multiples est un réseau neuronal convolutif qui est configuré pour effectuer une convolution dilatée à plusieurs taux de dilatation, et le modèle de réseau neuronal convolutif dilaté à taux multiples comprend N couches convolutives, une $N^{ième}$ couche convolutive étant une couche convolutive dilatée à plusieurs taux qui est configurée pour effectuer simultanément une convolution dilatée à plusieurs taux de dilatation, et N étant un nombre entier positif, et dans lequel
la mise en oeuvre d'une annotation de classification d'image complète sur l'image brute à différents taux de dilatation en utilisant un modèle de réseau neuronal convolutif dilaté à taux multiples, pour obtenir une carte de position d'objet globale correspondant à l'image brute comprend:

extraire une carte de caractéristique de l'objet cible à partir de l'image brute en utilisant de premières couches convolutives N-1 dans le modèle de réseau neuronal convolutif dilaté à taux multiples;
effectuer un traitement de convolution dilatée sur la carte de caractéristique de l'objet cible à une pluralité de taux de dilatation d de manière séparée en utilisant la couche de convolution dilatée à plusieurs taux, pour obtenir des régions d'objet à différents degrés de dispersion, dans lequel d est un nombre entier positif, chacun des degrés de dispersion indiquant une distribution de régions d'objet qui se trouve sur un objet cible et qui est obtenue à un taux de dilatation correspondant au degré de dispersion en utilisant le modèle de réseau neuronal convolutif dilaté à taux multiples, une valeur plus faible du degré de dispersion correspond à une distribution plus concentrée des régions d'objet sur une petite partie de l'objet cible, et une valeur plus élevée du degré de dispersion correspond à une distribution plus dispersée des régions d'objet sur l'ensemble de l'objet cible;
obtenir une première région d'objet dans un cas où le taux de dilatation est égal à 0, et une deuxième région d'objet dans un cas où le taux de dilatation est supérieur à 0;
obtenir un premier poids correspondant à la première région d'objet, et un deuxième poids correspondant à la deuxième région d'objet, dans lequel le premier poids est supérieur au deuxième poids; et
fusionner la première région d'objet et la deuxième région d'objet à différents degrés de dispersion selon le premier poids et le deuxième poids, pour obtenir la carte de position d'objet globale; et

utiliser la carte de position d'objet globale comme information de supervision pour un modèle de réseau de segmentation sémantique d'image, et entraîner le modèle de réseau de segmentation sémantique d'image en utilisant l'information de supervision.

2. Procédé selon la revendication 1, dans lequel la fusion de la première région d'objet et de la deuxième région d'objet à différents degrés de dispersion selon le premier poids et le deuxième poids, pour obtenir la carte de position d'objet globale comprend:

déterminer la première région d'objet $H_0$ dans un cas où d est égal à 0, et la deuxième région d'objet $(H_1,H_2,...,H_k)$ dans un cas où d est supérieur à 0 et inférieur ou égal à k, dans lequel k est une valeur maximale du taux de dilatation; et
fusionner la première région d'objet $H_0$ et la deuxième région d'objet $(H_1,H_2,...,H_k)$ à différents degrés de dispersion de la manière suivante, pour obtenir la carte de position d'objet globale $H$;

$$H = H_0 + \frac{1}{k}\sum_{i=1}^{k} H_i,$$

dans lequel

$$\frac{1}{k}$$

le premier poids est 1, le deuxième poids est $\frac{1}{k}$, et $H_i$ représente une $i^{ème}$ région d'objet dans la deuxième région d'objet$(H_1,H_2,...,H_k)$.

3. Procédé selon la revendication 1, dans lequel la mise en oeuvre d'un traitement de convolution dilatée sur la carte de caractéristique de l'objet cible à une pluralité de taux de dilatation d de manière séparée en utilisant la couche de convolution dilatée à plusieurs taux, pour obtenir des régions d'objet à différents degrés de dispersion, comprend:

obtenir un point de caractéristique de pixel $f_t(x,y)$ dont les coordonnées sont (x, y) sur une $t^{ème}$ carte de caractéristique de la couche convolutive dilatée à plusieurs taux, dans lequel t est un nombre entier positif;

obtenir un poids $w_{t,d}^c$ de connexion de la $t^{ème}$ carte de caractéristique à une $c^{ème}$ classe au taux de dilatation d, dans lequel c est un nombre entier positif; et

calculer une région d'objet $H_d{}^c$ correspondant à la $c^{ème}$ classe au taux de dilatation d de la manière suivante:

$$H_d{}^c = \sum_t \sum_{x,y} w_{t,d}^c f_t(x,y)$$

4. Procédé selon l'une quelconque des revendications 1 à 3, dans lequel l'utilisation de la carte de position d'objet globale comme information de supervision pour un modèle de réseau de segmentation sémantique d'image, et l'entraînement du modèle de réseau de segmentation sémantique d'image en utilisant l'information de supervision comprend:

entrer l'image brute dans le modèle de réseau de segmentation sémantique d'image pour obtenir un résultat de classification d'image en utilisant le modèle de réseau de segmentation sémantique d'image;

calculer une fonction de perte d'entropie croisée selon le résultat de classification d'image et les cartes de position d'objet globales pour obtenir un résultat de perte; et

rétro-propager le résultat de perte à toutes les couches du modèle de réseau de segmentation sémantique d'image pour continuer à entraîner le modèle de réseau de segmentation sémantique d'image.

5. Procédé selon l'une quelconque des revendications 1 à 3, dans lequel le modèle de réseau de segmentation sémantique d'image comprend un modèle de réseau neuronal à convolution profonde.

6. Support de stockage lisible par ordinateur comprenant une instruction, l'instruction, lorsqu'elle est exécutée sur un ordinateur, amenant l'ordinateur à mettre en oeuvre le procédé selon l'une quelconque des revendications 1 à 5.

7. Serveur comprenant:

un processeur, une interface de communication, une mémoire et un bus de communication,

le processeur, l'interface de communication et la mémoire mettant en oeuvre une communication mutuelle via le bus de communication; et l'interface de communication étant une interface d'un module de communication;

la mémoire étant configurée pour stocker un code de programme et transmettre le code de programme au processeur; et

le processeur étant configuré pour appeler une instruction du code de programme dans la mémoire pour mettre en oeuvre le procédé selon l'une quelconque des revendications 1 à 5.

8. Produit de programme informatique comprenant une instruction, l'instruction amenant un ordinateur à mettre en oeuvre le procédé selon l'une quelconque des revendications 1 à 5, lorsqu'elle est exécutée sur ledit ordinateur.

Obtain a raw image used for model training ⎯ 101

Perform a full-image classification annotation on the raw image at different dilation magnifications by using a multi-magnification dilated convolutional neural network model, to obtain global object location maps in the raw image at different degrees of dispersion, any one of the degrees of dispersion being used for indicating a distribution, on a target object, of object regions located at a dilation magnification corresponding to the degree of dispersion by using the multi-magnification dilated convolutional neural network model ⎯ 102

Use the global object location maps as supervision information for an image semantic segmentation network model, and train the image semantic segmentation network model by using the supervision information ⎯ 103

**FIG. 1**

Raw image

Convolutional neural network model

Dilated convolutional processing at different dilation magnifications

$d=r_1$

$d=r_2$

...

$d=r_k$

GAP

...

Cross entropy loss function

**FIG. 2**

**FIG. 3**

**FIG. 4**

| Raw image | Weakly supervised semantic segmentation | Annotated true value |

FIG. 5

FIG. 6-a

602

Global object location module

6021         6022         6023

| Feature map extraction unit | Dilated convolution unit | Pooling processing unit |

**FIG. 6-b**

6023

Pooling processing unit

60231         60232         60233

| Object region obtaining subunit | Weight obtaining subunit | Fusion subunit |

**FIG. 6-c**

6022

Dilated convolution unit

60221         60222         60223

| Pixel feature point obtaining subunit | Class weight obtaining subunit | Object region calculation subunit |

**FIG. 6-d**

603

Model training module

6031

6032

6033

| Model output unit | Loss function calculation unit | Back-propagation unit |

**FIG. 6-e**

1100

Server

1122 Central processing unit

Power supply 1126

Operating system 1141

Data 1144

Application program 1142

Storage medium 1130

Memory 1132

Wired or wireless network interface 1150

Input/output interface 1158

**FIG. 7**

**EP 3 779 774 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810317672

**Non-patent literature cited in the description**

- **JIWOON AHN et al.** *Learning Pixel-level Semantic Affinity with Image-level Supervision for Weakly Supervised Semantic Segmentation*
- **LIANG-CHIEH CHEN et al.** *DeepLab: Semantic Image Segmentation with Deep Convolutional Nets, Atrous Convolution, and Fully Connected CRFs*
- **LIANG-CHIEH CHEN et al.** *Rethinking Atrous Convolution for Semantic Image Segmentation*